# EUROPÄISCHE PATENTSCHRIFT

(11) **EP 0 726 173 B1**
(45) Veröffentlichungstag und Bekanntmachung des Hinweises auf die Patenterteilung: **15.11.2000**
(21) Anmeldenummer: 96101658.1
(22) Anmeldetag: 06.02.1996
(51) Int. Cl.: B60C 13/02

(54) **Indikator für den Abrieb an Seitenwänden von kraftfahrzeug-Luftreifen, insbesondere für Lastkraftwagen und Omnibusse**
Wear indicator on the sidewall of motor-vehicle tyres, particularly for lorries and buses
Indicateur d'usure sur les flancs de bandages pneumatiques de véhicules motorisés, en particulier pour poids-lourds et autobus

(30) Priorität: 07.02.1995 DE 19503932
(43) Veröffentlichungstag der Anmeldung: 14.08.1996
(73) Patentinhaber: Continental Aktiengesellschaft, 30165 Hannover (DE)
(72) Erfinder: Volk, Heiner, D-31535 Neustadt (DE); Becker, Axel, Dr., D-30938 Burgwedel (DE); Kreuser, Helmut, Dr., D-31535 Neustadt (DE)

(56) Entgegenhaltungen:
- DE-U- 8 023 409
- FR-A- 2 131 874
- LU-A- 67 299
- PATENT ABSTRACTS OF JAPAN vol. 016, no. 391 (M-1298), 19.August 1992 & JP-A-04 129808 (BRIDGESTONE CORP), 30.April 1992,

## Beschreibung

Die Erfindung betrifft einen Indikator für den Abrieb an den Seitenwänden von Kraftfahrzeug-Luftreifen, insbesondere für Lastkraftwagen und Omnibusse, in Form einer oder mehrerer auf den Reifenumfang verteilter Vertiefungen in der Reifenseitenwand.

Kraftfahrzeugreifen, beispielsweise Reifen von Omnibussen im Linienverkehr, scheuern beim Einfahren in eine Haltestelle sehr oft an den Bürgersteigkanten entlang. Dadurch werden die axial außenliegenden Reifenseitenwände sehr stark abgerieben. Dieser Abrieb kann bis auf die zur Verstärkung eingelegte Reifenkarkasse reichen und diese beschädigen. Derartig beschädigte Reifen stellen ein sehr hohes Unfallrisiko dar.

Aus der DE 80 23 409 Ul sind Abriebindikatoren bekannt, die in Form von auf dem Reifenumfang verteilten Vertiefungen ausgebildet sind. Solange die in dieser Druckschrift beschriebenen Vertiefungen noch als solche zu erkennen sind, ist der aufgetretene Abrieb tolerierbar, sind sie nicht mehr erkennbar oder sind sie nur noch sehr klein, so ist dies ein Zeichen dafür, den Reifen auszuwechseln.

Aus der JP-A-4 129 808 sind ferner kreisrunde, ovale oder elliptische Abriebindikatoren bekannt. Bei diesen Abriebindikatoren hat sich gezeigt, daß durch die Walkbewegung eines LKW- bzw. Omnibusreifens Risse in den Seitenwänden entstehen können, die von diesen Indikatoren ausgehen. Gleichbleibende Ausgangspunkte der Rißbildung sind dabei nur schwer auszumachen - lediglich bei ovalen Indikatoren hat sich gezeigt, daß die Risse an den diagonal gegenüberliegenden Übergängen von den geraden zu den gekrümmten Randteilen der äußeren Indikatorränder ausgehen.

Derartige Vertiefungen sind häufig als Ausgangspunkte für Risse in dem Gummikörper der Reifenseitenwand beobachtet worden. Diese Risse sind auf den oben beschriebenen ungünstigen Verlauf der Kraftlinien während des Abrollens des Reifens zurückzuführen.

Aufgabe der vorliegenden Erfindung ist es, einen Abriebindikator der eingangs beschriebenen Art zu schaffen, bei dem die von ihm ausgehende Rißbildung vermieden, zumindest aber auf ein Minimum reduziert wird.

Gelöst wird diese Aufgabe dadurch, daß die Vertiefungen in Draufsicht die geometrische Form einer Raute mit elliptisch abgerundeten Rautenecken aufweisen, wobei die Rautenseiten im Bereich von 45° bis 55° nicht deckungsgleich mit der Ellipse verlaufen.

Dabei ist es bei einer vorteilhaften Ausführung vorgesehen, daß die lange Rautenachse sich zu der kurzen Rautenachse wie 1 zu 0,5 bis 0,7, vorzugsweise wie 1 zu 0,63 verhält. Bei einer anderen Ausführung kann es vorgesehen sein, daß die lange Rautenachse um einen Kippwinkel aus der Radialrichtung der Reifenseitenwand von 0° bis 20°, vorzugsweise von 15° abweichend verläuft.

Damit wird ein Abriebindikator zur Verfügung gestellt, dessen Außenrand eine Kontur aufweist, die weder rund, noch oval, noch elliptisch ist. Er weist in Draufsicht die geometrische Form einer Raute auf, bei der die Rautenecken abgerundet sind. Durch diese geometrische Form können die sich ständig ändernden Zugkraftverhältnisse, die auf den Indikatorrand wirken, sowohl in tangentialer als auch in radialer Richtung gleichmäßiger aufgenommen werden, dadurch kommt es zu einer Minimierung der Spannungsunterschiede. Die an dem Abriebindikator auftretenden Walkkräfte werden im wesentlichen gleich, Spitzenbelastungen an den Vertiefungsrändern werden vermieden und die auftretenden Spannungen bleiben in einem für die Reifenseitenwände zulässigen Bereich. Die Rißbildung wird dadurch vermieden bzw. auf eine vernachlässigbare Größe verringert.

Weitere vorteilhafte Maßnahmen sind in den übrigen Unteransprüchen beschrieben. Die Erfindung ist anhand eines Ausführungsbeispieles in der beiliegenden Zeichnung dargestellt und wird nachfolgend näher beschreiben; es zeigt:
- **Figur 1**: den radialen Teilschnitt durch einen Kraftfahrzeug-Luftreifen;
- **Figur 2**: die Detaildarstellung der geometrischen Form eines erfindungsgemäßen Abriebindikators in Draufsicht;
- **Figur 3**: die Detaildarstellung der Kontur des Lochrandes eines erfindungsgemäßen Abriebindikators.

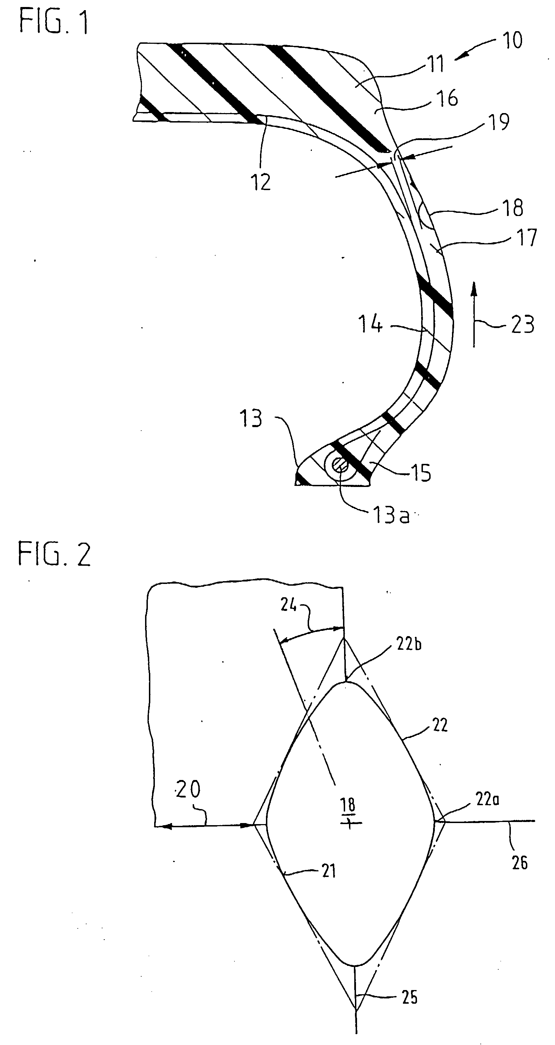

Der in der Figur 1 schematisch dargestellte Kraftfahrzeug-Luftreifen 10 besteht im wesentlichen aus einem Reifenkörper 11 aus Gummi oder aus einem anderer Elastomer. In diesen Reifenkörper 11 ist eine in Radialrichtung 23 verlaufende Karkasse 12 eingebettet. Die Karkasse 12 verläuft von Wulst 13 zum nicht dargestellten gegenüberliegenden Wulst und dient der Aufnahme der auf den Reifen 10 wirkenden Kräfte. Die Karkasse 12 ist in den Wülsten 13 um die Wulstkerne 13a geschlungen und festgelegt.

Von den radial innen liegenden Wulstpartien 15 bis in die radial außen liegenden Reifenschultern 16 erstrekken sich die Reifenseitenwände 14. Im Bereich der Reifenseitenwände 14 ist die Karkasse 12 axial außen mit einer sie schützenden Deckschicht 17 aus Gummi überzogen. Diese Deckschicht 17 kann im Laufe der Betriebszeit des Reifens 10 abgerieben werden. Um das Fortschreiten des Abriebs feststellen zu können, sind die Reifenseitenwände 14 mit Abriebindikatoren in Form von Vertiefungen 18 versehen.

Die Tiefe der Vertiefungen 18 ist so bemessen, daß mit Sicherheit noch eine ausreichend dicke Gummischicht 19 über der Karkasse 12 verbleibt, wenn die Vertiefungen 18 ganz abgerieben sind.

Die Abriebindikatoren in Form der Vertiefungen 18 sind auf dem Reifenumfang 20 gleichmäßig verteilt angeordnet. Je nach Reifengröße sind vorzugsweise vier bis sechs Vertiefungen 18 vorgesehen.

Wie die Figur 2 zeigt, weisen die Vertiefungen 18 eine geometrische Form auf, die der einer Raute 22 entspricht, deren Rautenecken 22a, 22b elliptisch abgerundet sind. Die elliptischen Abrundungen sind dabei in die Bereiche der Rautenecken 22a und 22b in diese einbeschrieben. Die langen Rauten/Ellipsen-Achsen 25 verlaufen in Radialrichtung 23 über die Reifenseittenwand 14, während die kurzen Rauten/Ellipsen-Achsen 26 in Richtung des Reifenumfangs 20 verlaufen.

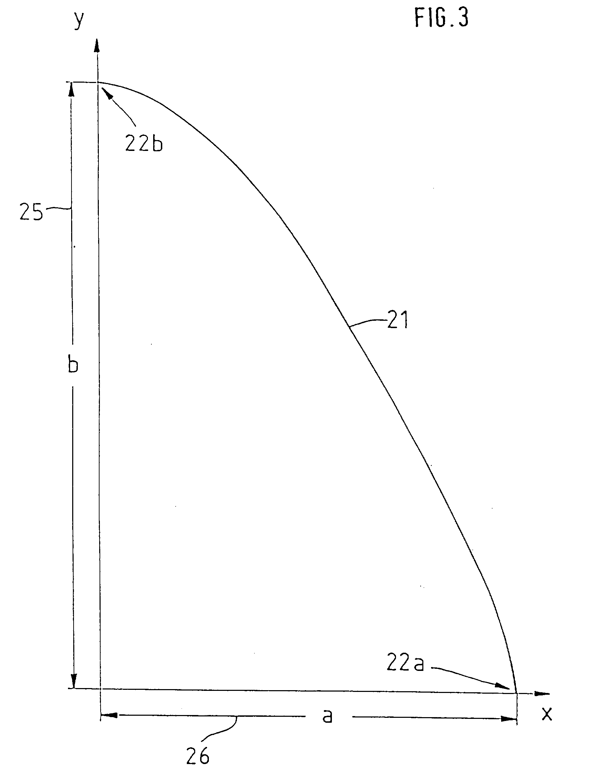

Wie Figur 3 zeigt, verlaufen etwa im Bereich zwischen 45° und 55° Überhöhung, bezogen auf die kurze Rauten/Ellipsen-Achse [x(a)-Achse] 26, die Rautenseiten als Gerade und sind nicht deckungsgleich mit den einbeschriebenen Ellipsen, dh. die Indikatorränder zumindest verlaufen in diesem Bereich als Geraden.

Das Verhältnis der kurzen Rauten/Ellipsen-Achse [x(a)-Achse] 26 zu der langen Rauten/Ellipsen-Achse [y(b)-Achse] 25 beträgt dabei etwa 0,5 bis 0,7, vorzugsweise 0,63. Die Abriebindikatoren sind somit als Vertiefungen 18 ausgebildet, die die Form einer aufrechtstehenden Raute 22 aufweisen, in deren Rautenecken 22a, 22b eine Ellipse entsprechend der Kontur 21 eingezeichnet ist. Die lange Rauten/Ellipsen-Achse 25 [y(b)-Achse] können um einen Kippwinkel 24 aus der Radialrichtung 23 der Reifenseitenwand 14 von 0° bis 20°, vorzugsweise von 15° abweichend verlaufen.

### Bezugszeichen

- 10: Kraftfahrzeug-Luftreifen
- 11: Reifenkörper
- 12: Karkasse
- 13: Wulst
- 13a: Wulstkern
- 14: Reifenseitenwand
- 15: Wulstpartie
- 16: Reifenschulter
- 17: Deckschicht
- 18: Vertiefung
- 19: verbleibende Gummischicht
- 20: Reifenumfang
- 21: Konturrand
- 22: Raute
- 22a, 22b: Rautenecke
- 23: Radialrichtung
- 24: Kippwinkel
- 25: lange Rauten/Ellipsen-Achse
- 26: kurze Rauten/Ellipsen-Achse

## Patentansprüche

1. Indikator für den Abrieb an den Seitenwänden von Kraftfahrzeug-Luftreifen, insbesondere für Lastkraftwagen und Omnibusse, in Form einer oder mehrerer auf den Reifenumfang verteilter Vertiefungen in der Reifenseitenwand, dadurch gekennzeichnet, daß die Vertiefungen (18) in Draufsicht die geometrische Form einer Raute (22) mit elliptisch abgerundeten Rautenecken (22a, 22b) aufweisen, wobei die Rautenseiten im Bereich von 45° bis 55° nicht deckungsgleich mit den einbeschriebenen Ellipsen verlaufen.

2. Abriebindikator nach Anspruch 1, dadurch gekennzeichnet, daß die lange Rautenachse (25) sich zu der kurzen Rautenachse (26) wie 1 zu 0,5 bis 0,7, vorzugsweise wie 1 zu 0,63 verhält.

3. Abriebindikator nach den Ansprüchen 1 und 2, dadurch gekennzeichnet, daß die lange Rautenachse (25) um einen Kippwinkel (24) aus der Radialrichtung (23) der Reifenseitenwand (14) von 0° bis 20° vorzugsweise von 15° abweichend verläuft.

4. Abriebindikator nach den Ansprüchen 1 bis 3, dadurch gekennzeichnet, daß die lange Rautenachse (25) in Radialrichtung (23) und die kurze Rautenachse (26) in Umfangsrichtung (20) der Reifenseitenwand (14) verläuft.

## Claims

1. Indicator for indicating the wear on the sidewalls of pneumatic automotive vehicle tyres, more especially for heavy goods vehicles and buses, in the form of one or more indentations, which are distributed over the tyre circumference, in the sidewall of the tyre, characterised in that the indentations (18), when viewed from above, have the geometrical form of a rhomboid (22) with elliptically rounded rhomboid corners (22a, 22b), the rhomboid sides extending within the range of between 45° and 55° incongruently with the inscribed ellipses.

2. Wear indicator according to claim 1, characterised in that the ratio between the long rhomboid axis (25) and the short rhomboid axis (26) is 1 to 0.5 to 0.7, preferably 1 to 0.63.

3. Wear indicator according to claims 1 and 2, characterised in that the long rhomboid axis (25) extends so as to deviate from the radial direction (23) of the sidewall (14) of the tyre about a tilt angle (24) of between 0° and 20°, preferably 15°.

4. Wear indicator according to claims 1 to 3, characterised in that the long rhomboid axis (25) extends in the radial direction (23), and the short rhomboid axis (26) extends in the circumferential direction (20) of the sidewall (14) of the tyre.

## Revendications

1. Indicateur pour l'usure des flancs des pneumatiques des véhicules automobiles, en particulier pour des véhicules utilitaires et de transport en commun, formé d'un évidement du flanc du pneumatique, ou de plusieurs évidements répartis sur la circonférence du pneumatique, caractérisé en ce qu'en vue de dessus, les évidements (18) présentent la forme géométrique d'un losange (22) à angles (22a, 22b) arrondis avec une forme elliptique, les côtés du losange n'étant pas confondus avec les ellipses inscrites dans le secteur de 45° à 55°.

2. Indicateur d'usure selon la revendication 1, caractérisé en ce que le rapport du grand axe (25) du losange au petit axe (26) du losange est compris entre 1 à 0,5 et 1 à 0,7, et de préférence égal à 1 à 0,63.

3. Indicateur d'usure selon les revendications 1 et 2, caractérisé en ce que le grand axe (25) du losange s'écarte de la direction radiale (23) du flanc (14) du pneumatique d'un angle d'inclinaison (24) compris entre 0° et 20° et de préférence égal à 15°.

4. Indicateur d'usure selon les revendications 1 à 3, caractérisé en ce que le grand axe (25) du losange s'étend dans la direction radiale (23) et le petit axe (26) du losange s'étend dans la direction circonférentielle (20) du flanc (14) du pneumatique.
